# DEMANDE DE BREVET EUROPEEN

(11) **EP 0 753 495 A2**
(43) Date de publication de la demande: **15.01.1997**
(21) Numéro de dépôt: 96111126.7
(22) Date de dépôt: 10.07.1996
(51) Int. Cl.: C05F 9/04, C05F 9/00

(54) **Procédé de production d'un amendement organique stabilisé, et installation pour la mise en oeuvre de ce procédé**

(30) Priorité: 11.07.1995 FR 9508384
(71) Demandeur: VALORGA PROCESS, 80000 Amiens (FR)
(72) Inventeur: Combrie, José, 34980 Combaillaux (FR); Gueperoux, Jacques, 34130 Mudaison (FR); Lotti, Jean-Pierre, 34130 Valergues (FR); Saint-Joly, Claude, 34160 Sussargues (FR)
(74) Mandataire: Carstens, Wilhelm, Dipl.-Phys.

(57) **Abrégé**

L'invention concerne un procédé de production d'un amendement organique stabilisé de haute qualité.

Cet amendement est obtenu par fermentation aérobie ou anaérobie (1) de matières organiques telles que des déchets ménagers et présente une faible teneur en matière inerte. Le procédé est caractérisé en ce qu'il comporte une opération d'élimination des matières inertes effectuée en aval des processus biologiques de fermentation (1) sur un produit en phase liquide (8).

L'invention est utilisable dans le domaine du traitement de déchets.

## Description

La présente invention concerne un procédé de production d'un amendement organique stabilisé de haute qualité, obtenu par fermentation aérobie ou anaérobie de matières organiques telle que des déchets ménagers, et présentant une faible teneur en matières inertes, ainsi qu'une installation pour la mise en oeuvre de ce procédé.

On saît que des amendements organiques stabilisés de haute qualité, généralement aussi appelés composts, pour être intéressants doivent présenter une teneur en matières inertes inférieure à un seuil dont la valeur dépend des normes en vigueur. La teneur en inertes dans les composts est bien entendu fonction de la teneur en inertes dans le produit frais devant être traité. La teneur en inertes, en particulier en inertes fin ou en sable dans le produit frais peut être importante notamment lorsqu'il s'agit de déchets ménagers (déchets de cuisine, déchets de jardin, papiers-cartons) contenant une proportion importante en déchets de jardin. Par conséquent, il est nécessaire de réduire la teneur en matière inertes afin d'obtenir une qualité de composts satisfaisante.

Il est connu de prévoir une opération d'élimination des matières inertes en amont des processus biologiques de fermentation, directement sur le produit frais, par différentes méthodes, telles que par exemple par lavage on criblage.

Ce procédé d'élimination des inertes en dont de la fermentation présente l'inconvénient que le produit frais doit être en un état relativement liquide et est donc difficilement ou pas du tout compatible avec un produit frais ayant une forte teneur en matière solide.

La présente invention a pour but de proposer un procédé du type indiqué plus haut, qui est également utilisable pour un produit frais ayant une teneur importante en matière solide.

Pour atteindre ce but, le procédé selon l'invention est caractérisé en ce que l'on prévoit l'opération d'élimination des inertes en aval des processus biologiques de fermentation.

Selon une caractéristique de l'invention, une élimination est effectuée directement en aval du processus de fermentation si celui-ci permet l'obtention d'un produit suffisamment liquide.

Selon une autre caractéristique de l'invention, l'opération de l'élimination est effectuée après une opération de séparation liquide/solide appliquée sur le produit obtenu par le processus de fermentation de façon que la matière inerte soit concentrée dans la partie liquide et l'élimination des inertes se fait sur cette dernière.

Selon une caractéristique de l'invention, la séparation liquide/solide est une déshydratation mécanique par pressage du produit obtenu par la fermentation.

L'installation pour la mise en oeuvre du procédé selon l'invention est caractérisée en ce qu'elle comprend au moins un hydrocyclone situé en aval de la partie de fermentation et constituant le moyen de séparation liquide/solide précité.

Selon une caractéristique de l'invention, l'installation comprend, en aval du dispositif de fermentation un dispositif de séparation liquide/solide tel qu'un dispositif de pressage et l'hydrocyclone reçoit la partie liquide obtenue à la sortie du dispositif de pressage.

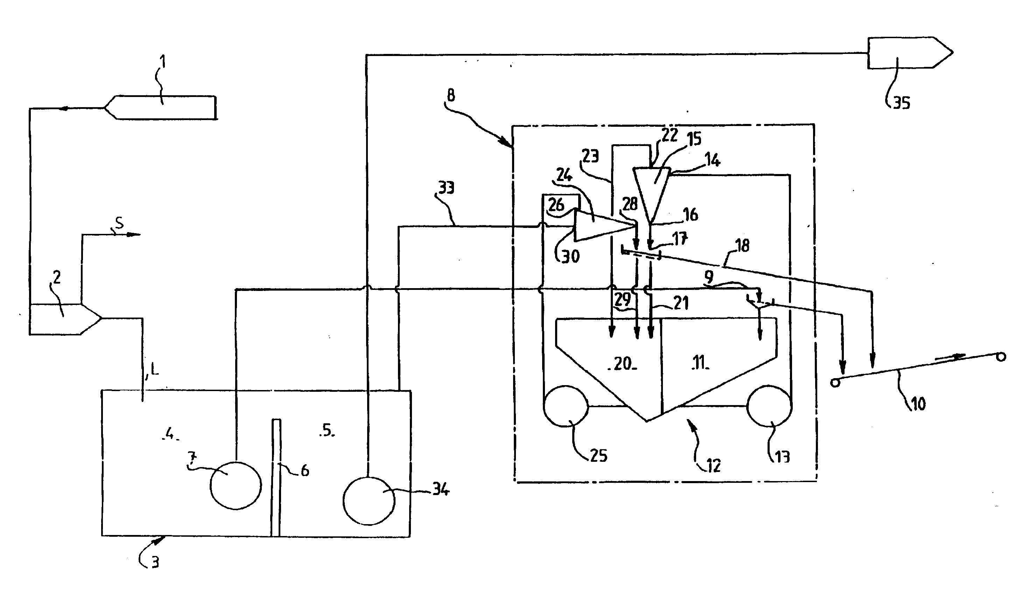

L'invention sera mieux comprise et d'autres buts, caractéristiques, détails et avantages de celle-ci apparaîtront plus clairement dans la description explicative qui sa suivre faite en référence à la figure unique annexée donnée uniquement à titre d'exemple illustrant un mode de réalisation de l'invention.

La figure unique montre sous forme d'un schéma synoptique une installation selon l'invention pour la production d'un amendement organique stabilisé de haute qualité, appelé ci-après compost, qui ne présente qu'une faible teneur en matière inerte, en particulier en inertes fins ou en sable.

Cette installation est conçue pour le traitement d'un produit issu du dispositif de fermentation qui n'est pas suffisamment Liquide pour être directement soumis à l'opération d'élimination de matières inertes.

Sur cette figure on montre en 1 schématiquement un dispositif de fermentation tel qu'un digesteur anaérobie à la sortie duquel est disponible le produit contenant les inertes qui doivent être éliminées ou dont la teneur doit être réduite. Dans cette installation, le produit sortant du digesteur est transféré à un dispositif de séparation liquide/solide 2 tel qu'un dispositif de séparation par pressage, qui sépare le produit reçu en une phase solide S et une phase liquide L. La phase solide, c'est-à-dire le jus de pressage parvient dans une cuve 3 qui comprend deux compartiments 4 et 5 séparés par une cloison 6. Le compartiment 4 stocke le jus de pressage dans lequel sont concentrés les inertes fins ou du sable tandis que la phase solide S est évacuée de l'installation.

Le jus de pressage est transféré par l'intermédiaire d'une pompe 7 à un dispositif 8 d'élimination de matière inerte et précisément à un dégrilleur ou crible 9 qui retire du jus les matières inertes de plus grande taille. Celles-ci sont évacuées à l'aide d'un convoyeur 10. Le jus de pressage après avoir traversé le dégrilleur 8 parvient dans un premier compartiment 11 d'une cuve 12. Une pompe 13 transfert le liquide du compartiment 11 à l'entrée 14 d'un premier hydrocyclone 15. Le traitement du jus par hydrocyclonage permet la séparation du jus entrant en 14 en deux flux, l'un, d'aspect solide, riche en inertes ou sable et pauvre en matières organiques, l'autre, d'aspect liquide, pauvre en inertes ou en sable et ayant conservé la grosse partie de la matière organique initialement contenue dans le jus en provenance du compartiment 11. L'hydrocyclone 15 comprend donc une première sortie 16 du flux d'aspect solide située au-dessus d'une grille de séparation 17 du liquide des matières inertes. Ces dernières sont transférées sur le convoyeur d'évacuation 10, par un moyen de transport 18. Comme l'indique la ligne fléchée 21, le liquide parvient dans un deuxième compartiment 20 de la cuve 12.

L'hydrocyclone 15 comprend une deuxième sortie 22 pour le flux d'aspect liquide. Ce flux est également transféré au compartiment 20 de la cuve 12, comme cela est indiqué par la ligne fléchée 23.

Le liquide qui est stocké dans ce compartiment 20 est transféré par une pompe 25 à l'entrée 26 d'un deuxième hydrocyclone 24 qui sépare le flux entrant en 26, comme l'hydrocyclone 15, en deux flux, un flux d'aspect solide et un flux d'aspect liquide. Le premier flux sort en 28 de l'hydrocyclone 24 et parvient sur la grille de séparation 17. Comme dans le cas de l'hydrocyclone 15, les matières inertes sont transférées par le moyen de transport 18 au convoyeur d'évacuation 10, tandis que la partie liquide revient en 29 dans le compartiment 20 de la cuve 12. Le flux d'aspect liquide qui sort en 30 de l'hydrocyclone est véhiculé par une conduite 33 dans le deuxième compartiment 5 de la première cuve 3. Le jus d'hydrocyclonage stocké dans ce compartiment 5 est transféré par une pompe 34 à une station de centrifugation indiquée schématiquement en 35.

L'installation selon l'invention, qui vient d'être décrite a d'excellentes performances d'élimination des inertes fins ou du sable tout en permettant de perdre le moins possible de matière organique dans le produit sableux ou riche en inertes fins, qui est évacué en 9 de l'installation. Il s'avère que la matière ainsi évacuée a une teneur en matière sèche qui est supérieure à 60% (du poids frais) et une teneur en matière organique inférieure à 10% (du poids frais).

Le résultat que produit l'installation selon l'invention est double : la fraction liquide traitée par hydrocyclonage conserve la grande partie de sa matière organique récupérée normalement par un traitement complémentaire, par exemple par une centrifugeuse ou un filtre bande, d'où l'obtention d'un compost riche en matière organique et pauvre en inertes fins ou sable. Le produit riche en inertes fins ou sable éliminé en 9 est pauvre en matière organique, ce qui facilite son évacuation par exemple par une mise en décharge.

Concernant l'action de l'agencement des deux hydrocyclones 15 et 24 qui sont montés en série, il sépare le jus contenu dans le compartiment 11 de la deuxième cuve 12 en deux flux sortant, l'un liquide 33 et l'autre solide 18, de telle sorte que le flux sortant solide 18 contienne plus de 50% de sable ou inertes contenus dans le produit entrant et moins de 20% de la matière organique initialement contenue dans le jus entrant en 14 dans le premier hydrocyclone 15.

Il est à noter que si le produit sortant du digesteur l est suffisamment liquide, il peut être transféré directement au dispositif d'élimination 8, sans passer par le dispositif de pressage 2.

## Revendications

1. Procédé de production d'un amendement organique stabilisé de haute qualité, obtenu par fermentation aérobie ou anaérobie de matières organiques telles que des déchets ménagers et présentant une faible teneur en matière inerte, ce procédé comportant une opération d'élimination des matières inertes, caractérisé en ce que l'opération d'élimination des matières inertes est effectuée en aval des processus biologiques de fermentation sur un produit en phase liquide.

2. Procédé selon la revendication 1, caractérisé en ce que l'opération d'élimination est directement effectuée en aval du processus de fermentation si celui-ci permet l'obtention d'un produit suffisamment liquide.

3. Procédé selon la revendication 1, caractérisé en ce que l'on soumet le produit obtenu par le processus de fermentation à une opération de séparation liquide/solide pour que la matière inerte soit concentrée dans la partie liquide et effectue l'opération d'élimination des inertes sur cette partie liquide.

4. Procédé selon la revendication 3, caractérisé en ce que la séparation liquide/solide est une déshydratation mécanique par pressage du produit obtenu par la fermentation.

5. Procédé selon l'une des revendications précédentes, caractérisé en ce que l'élimination des matières inertes est obtenue par hydrocyclonage.

6. Installation pour la mise en oeuvre du procédé selon l'une des revendications 1 à 5, caractérisé en ce qu'il comprend un dispositif d'élimination (8) destiné à traiter le produit obtenu à la sortie d'un dispositif de fermentation (1).

7. Installation selon la revendication 6 caractérisée en ce qu'un dispositif de séparation liquide/solide (2) est interposé entre le dispositif de fermentation (1) et le dispositif d'élimination (8), ce dernier étant destiné à traiter la phase liquide L produite par le dispositif de séparation.

8. Installation selon la revendication 7, caractérisé en ce que le dispositif de séparation (2) est un dispositif de pressage.

9. Installation selon l'une des revendications 6 à 8, caractérisée en ce que le dispositif d'élimination comprend au moins un hydrocyclone (14).

10. Installation selon la revendication 9, caractérisée en ce que le dispositif d'élimination (8) comprend deux hydrocyclones (10, 24) qui sont montés en série, une grille de séparation liquide/matière solide étant prévue aux sorties (16, 28) de flux de matière solide (17, 19) des hydrocyclones.

11. Installation selon l'une des revendications 6 à 10, caractérisée en ce qu'une grille de séparation liquide/matière solide (9) est prévue en amont du premier hydrocyclone (15).
